# EUROPEAN PATENT APPLICATION

(11) **EP 4 600 939 A1**
(43) Date of publication of application: **13.08.2025**
(21) Application number: 24156605.8
(22) Date of filing: 08.02.2024
(51) Int. Cl.: G09F 9/33, G09F 23/00

(54) **INFORMATION DEVICE FOR CONTROLLING A DISPLAY OF INFORMATION**

(71) Applicant: ABB SCHWEIZ AG, 5400 Baden (CH)
(72) Inventor: MARTINS, Fabrice, 69230 Saint Genis Laval (FR)
(74) Representative: Maiwald GmbH

(57) **Abstract**

The present invention relates to an information device (100) for controlling a display of information, comprising:
- a LED film (10) having a surface (12) with a first area (14) and a second area (15),
- a configurable LED panel (16), wherein the LED panel (16) is part of the first area (14);
- a control interface (20), wherein the control interface (20) is part of the second area (15) of the LED film (10) and is configured to receive a control command (35) from a control device (30) to adapt the display of information on the first area (14) of the LED panel (16) of the information device (100).

## Description

### FIELD OF THE INVENTION

The present invention relates to an information device for controlling a display of information.

### BACKGROUND OF THE INVENTION

Existing signage products in prior art use often a rigid and fixed pictogram that needs to be changed due to installation constraints, e.g. right, left, up, down etc., in terms of a position of said product that is no longer suitable.

The installation of such a signage product is mainly on a ceiling, a wall or recessed and such an installation is most often obtrusive.

Further, in case the layout of the signage product needs to be changed to due to adapt the product to another application scenario, installation and removal of the signage product needs to be performed by qualified personal which leadings to increasing operation costs of such a signage product.

There is a need to address these issues.

### SUMMARY OF THE INVENTION

Therefore, it would be advantageous to provide an improved concept for an information device that can be configurated due to varying application scenarios in an efficient and cost-saving manner.

The object of the present invention is solved by the subject matter of the independent claims, wherein further embodiments are incorporated in the dependent claims.

In a first aspect of the present invention, there is provided an information device for controlling a display of information, comprising:
- a LED film having a surface with a first area and a second area,
- a configurable LED panel, wherein the LED panel is part of the first area;
- a control interface, wherein the control interface is part of the second area of the LED film and is configured to receive a control command from a control device to adapt the display of information on the first area of the LED panel of the information device.

In other words, a core idea behind the present invention is to use a flexible and configurable LED film that includes a LED panel to display at least one information object such as text, pictures, e.g. in form of pictograms, in a static and /or dynamic manner.

The information device is configurable and can be easily controlled to adapt the displayed object information when an application or use-case scenario changes.

The LED film can be installed on any surface of an object and can be easily repositioned without extensive knowledge of of a qualified staff.

The present information device has further advantages:
- Tool-less installation in an easy manner.
- There is no need to prepare a surface of an object for installation of the information device, e.g. wiring, drilling etc.
- Easy refurbishment.
- Transparent property, even if the picture displayed in enlightened.

According to an example, the control device is part of the information device and connectable to the control interface of the information device. In this way, the information device can be controlled and handeled in an efficient manner.

According to an example, the control interface is part of the LED film. In this way, the information device can be controlled and handeled in an efficient manner.

According to an example, the information device comprises a fixing component applied to at least a part of the surface of the LED film to be able to apply the information device on a second surface of an object. In this manner, the information device can be installed in an efficient and cost-saving manner on any object component.

According to an example, at least the first area of the LED film has a transparent property that is configurable by the control device. In this way, a display property of the information device can be easily adapted to a changed application scenario.

According to an example, a luminance value of the LED film is configurable between a security mode and maintained mode, wherein in the security mode the LED film has a luminance value of at least 2 cd/m² and wherein in the maintained mode the LED film has a luminance value of about 500 cd/m². In this way, the information device can be flexibly operated in different operation modes suitable to a required application scenario.

According to an example, a contrast property of the LED film between a green reference color and a white reference color is configurable between a x-coordinate-value 5 and a y-ccordinate-value 15 in a chromaticity diagram as defined in the ISO 3864-4 standard. In this manner, the information device can be flexibly adapted and operated in different operation modes suitable to a required application scenario.

In a second aspect of the present invention, a display system is provided comprising an information device according to any of the previous examples and / or according to the first aspect for configurating the information device.

In a third aspect of the present invention, a computer is provided comprising a processor configured to control the information device according to the first aspect and / or according to any of the previous examples.

In a fourth aspect of the present invention, a computer program product is provided comprising instructions which, when the computer program is executed by a processor of a computer, causes the computer to control the information device of the first aspect.

In a fifth aspect, a machine-readable data medium and / or download product is provided containing the computer program according to the third aspect.

### BRIEF DESCRIPTION OF THE DRAWINGS

Exemplary embodiments will be described in the following with reference to the following drawing:

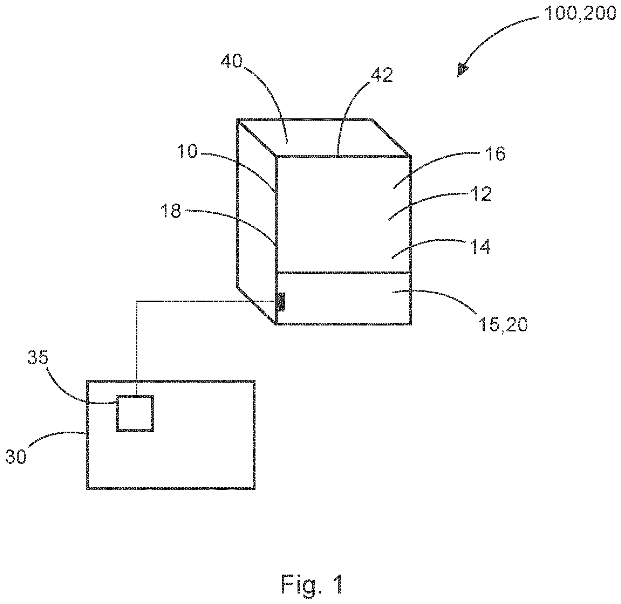

Fig. 1 illustrates a schematic information device according to an embodiment of the present invention.

### DETAILED DESCRIPTION OF THE DRAWINGS

Fig. 1 illustrates a schematic information device 100 for controlling a display of information on said information device according to an embodiment of the present invention.

The information device 100 for controlling or configurating/adapting a display of information, comprises a LED film 10 having a surface 12 with at least one area 14 or with a first area 14 and a second area 15, as depicted in Fig. 1.

The LED film 10 may be a transparent LED film that is known in prior art and which can be used as a basis component to be adapted for the information device 100 of the present invention. Therefore, it is not recessary to provide further details of the LED film 10 herein.

The information device 100 further comprises a configurable LED panel component 16, wherein the LED panel 16 is part of the first area 14. However, the LED panel 16 may be arranged in any other position or area within the LED film 10.

Further, the LED panel 16 may be connected to a power supply that may be installed inside the information device 100 or externally of the information device 100.

The information device 100 further comprises a control interface 20. Preferably, the control interface 20 is part of the second area 15 of the LED film 10. However, the control interface 20 may also be positioned on any other suitable part of the information device 100 or the LED film 10, if the application scenario requires so.

The control interface 20 is configured to receive a control command 35 from a control device 30 to adapt the display of information on the first area 14 of the LED panel 16 of the information device 100.

Optionally, at least some part of the control device 30 is part of the information device 100 and connectable to the control interface 20 of the information device 100, e.g. by a wireless or wired connection. The control device 30 may, however, be embodied as an electronic device, e.g. a computer, a smartphone, a table etc, that is able to generate a corresponding control command 35 to control the information device 100 based on input provided by a user and / or an automated control system.

The information display 100 may be part of a display system 200. The display system 200 may comprise a computer that is connectable or connected to the information device 100 in a cable-mounted and / or wiresless manner.

Optionally, the information device 100 comprises a fixing component 18 that can be applied to at least a part of the surface 12 of the LED film 10. In this way, the information device 100 can be applied on a second surface 42 of an object 40, e.g. a window, a door etc. The second surface 42 of the object 40 may be a flat surface or a surface of any dimension or shape. The fixing component 18 may be any suitable means to fast or fix the information device 100 onto the second surface of the object 40. The fixing component 18 may involve for example mechanical, adhesive, magnetc or any other suitable means.

Optionally, the at least first or that at least one area 14 of the LED film 10 has a transparent property that is configurable by the control device 30.

Optionally, a luminance value or a luminance property (value) of the LED film 10 is configurable between a security mode and maintained mode, wherein in the security mode the LED film 10 has a luminance value of at least 2 cd/m² and wherein in the maintained mode the LED film 10 has a luminance value of about 500 cd/m².

Optionally, a contrast property of the LED film 10 between a green reference color and a white reference color is configurable between a x-coordinate-value of about 5 and a y-ccordinate-value of about 15 in a chromaticity diagram as defined by the ISO 3864-4 standard.

### Reference signs

- 10: LED film
- 12: Surface
- 14: First area
- 15: Second area
- 16: LED panel
- 18: Fixing component
- 20: Control interface
- 30: Control device
- 35: Control command
- 40: Object
- 42: Second surface
- 100: Information display
- 200: Display system

## Claims

1. Information device (100) for controlling a display of information, comprising:
- a LED film (10) having a surface (12) with a first area (14) and a second area (15),
- a configurable LED panel (16), wherein the LED panel (16) is part of the first area (14);
- a control interface (20), wherein the control interface (20) is part of the second area (15) of the LED film (10) and is configured to receive a control command (35) from a control device (30) to adapt the display of information on the first area (14) of the LED panel (16) of the information device (100).

2. Information device (100) according to claim 1, wherein the control device (30) is part of the information device (100) and connectable to the control interface (20) of the information device (100).

3. Information device (100) according to any of the previous claims, wherein the control interface (20) is part of the LED film (10).

4. Information device (100) according to any of the previous claims, comprising: a fixing component (18) applied to at least a part of the surface (12) of the LED film (10) to be able to apply the information device (100) on a second surface (42) of an object (40).

5. Information device (100) according to any of the previous claims, wherein at least the first area (14) of the LED film (10) has a transparent property that is configurable by the control device (30).

6. Information device (100) according to any of the previous claims, wherein a luminance value of the LED film (10) is configurable between a security mode and maintained mode, wherein in the security mode the LED film (10) has a luminance value of at least 2 cd/m² and wherein in the maintained mode the LED film (10) has a luminance value of about 500 cd/m².

7. Information device (100) according to any of the previous claims, wherein a contrast property of the LED film (10) between a green reference color and a white reference color is configurable between a x-coordinate-value 5 and a y-ccordinate-value 15 in a chromaticity diagram as defined in the ISO 3864-4 standard.

8. Display system (200) comprising an information device (100) according to any of the previous claims.

9. A computer comprising a processor configured to control the information device (100) of any preceding claims 1 to 7.

10. A computer program product comprising instructions which, when the computer program is executed by a processor of a computer, causes the computer to control the information device (100) of any preceding claims 1 to 7.

11. Machine-readable data medium and / or download product containing the computer program according to claim 10.
